# EUROPEAN PATENT SPECIFICATION

(11) **EP 3 754 632 B1**
(45) Date of publication and mention of the grant of the patent: **14.08.2024**
(21) Application number: 20382108.7
(22) Date of filing: 13.02.2020
(51) Int. Cl.: G09F 21/04, B60R 13/10, G09F 7/18

(54) **LICENSE PLATE**
KENNZEICHENSCHILD
PLAQUE D'IMMATRICULATION

(30) Priority: 21.06.2019 ES 201930572
(43) Date of publication of application: 23.12.2020
(73) Proprietor: INDUSTRIAS SAMAR'T, S.A., 17600 Figueres (Girona) (ES)
(72) Inventor: SANCHEZ CASADEVALL, Enrique, 17600 FIGUERES (GIRONA) (ES)
(74) Representative: Munoz Garcia, Antonio

(56) References cited:
- EP-A1- 1 092 595
- EP-A1- 1 385 133
- WO-A2-2006/136847
- FR-A1- 2 983 149
- GB-A- 2 376 437

## Description

### OBJECT OF THE INVENTION

As expressed in the title of the present specification, the invention relates to a license plate, providing certain advantages and features described in detail below to the intended function, representing an improvement in the current state of the art.

More specifically, the object of the invention focuses on a license plate which, being of the type intended for being produced by means of a lamination process in a portable laminating press, is specifically designed for the purpose of simplifying its manufacture, and accordingly lower its cost, since it simply comprises a metallic base provided with a peripheral rim and an upper sheet of transparent film having a certain thickness, between 20 and 70 µm, on which the corresponding characters and logotypes are digitally printed, on the upper face or on the lower face in mirrored fashion, and which is fixed by means of gluing so as to be fitted in the central recess defining the mentioned peripheral rim of the metallic base which will already have a reflective film, providing an aesthetic effect of a high-end plate with an acrylic finish and metallic reinforcement, but without being one, and with a much lower economic cost and simpler and faster production.

### FIELD OF APPLICATION OF THE INVENTION

The field of application of the present invention is comprised within the sector of the industry dedicated to the manufacturing accessories for vehicles, namely identification elements, particularly focusing on licenses and the like.

### BACKGROUND OF THE INVENTION

As is known, there are basically two types of license plates on the market, those referred to as conventional, which are made of sheet metal and generally have numbers printed on them by means of a deep drawing process, and those license plates that are made of plastic or methacrylate, generally made from a transparent acrylic plate the rear face of which is printed by means of laminating several layers.

The advantages of the second type over the first type are primarily aesthetic, since methacrylate plates are much more attractive, easy to clean, and especially do not become dented or bend, as occurs with conventional sheet metal plates.

However, the methacrylate plates are also susceptible to presenting damage, usually due to impacts or excessive pressure when screwing in the plate, causing cracks in the plastic material.

In any case, the main drawback of these plates is their high price, since in order to achieve sufficient strength, the piece of methacrylate must be fairly thick if the unwanted effects of "buckling", which could occur due to heat or other atmospheric agents, are to be prevented.

To solve this problem, patent ES2612727B1, the proprietor of which is the same applicant of the present invention, discloses a "reinforced license plate" which combines the advantages of metallic plates and of acrylic plates, for which purpose it essentially comprises, bonded by means of lamination, a metallic lower base of aluminum sheet having a peripheral reinforcement, an intermediate sheet, which can be of a reflective material or incorporate a layer of said material, which incorporates logotypes and alphanumerical characters printed thereon, and on it there is a transparent upper layer of methacrylate plate, between 1 to 3 millimeters, which protects and improves the appearance of the intermediate sheet. The peripheral reinforcement of the lower base consists of a rim running along the peripheral extension thereof forming a protuberance rising slightly above the rest of this base and projecting outwardly and closely with respect to the printed intermediate sheet and the protective transparent plate of the upper layer, which are identical in terms of shape and dimension, being fitted in the central recess determined by said rim in the lower base.

Even though said plate satisfactorily meets the intended objective, i.e., to provide a plate with the advantages, particularly the aesthetic advantages, of methacrylate plates and with the advantages, particularly the advantages of their resistance to impacts on the periphery, of metallic plates with a rim, it presents the drawback of being complex in terms of its manufacture due to the large number of layers it comprises and the processes to which each of them is subjected in order to form them, and accordingly a high economic cost, so it would be desirable to have an option that is simpler, easier to manufacture and produce, and also more economical which, while offering an at least aesthetically similar result, may also carry out the function of reinforcing the lower base, with the objective of the present invention being the development of a new license plate which meets said premise.

Moreover, and in reference to the current state of the art, the following documents should be pointed out as being the most closely related:
Patent GB 2 376 437 A relates to identification plates which, unlike the plate of the present invention, discloses a method in a complicated laminating station in which plates are produced by advancing a transparent sheet material having an opaque material in contact with one major surface thereof to a printing station, printing indicia in reverse on the other major surface of the sheet material and securing the printed sheet material to a substrate having a retro-reflective surface such that the printed surface is in contact with, or at least adjacent to, the retro-reflective surface, where the passage of the transparent sheet material may be optically sensed as it is conveyed towards the printing means, the opaque material in the form of a liner may be removed from the transparent sheet subsequent to securing the transparent sheet to the substrate, and the retro-reflective substrate may be made by securing a retro-reflective sheet material to a major surface of the substrate, locating a retro-reflective sheet material within a mould and injecting plastics material into the mould or locating reflective particles such as glass, mineral or plastics in a molten plastics material to form a plastics matrix and molding. In this case, even though in one of its options the base can be a metal, it is evident that the process is eminently conceived for a base made of a plastic material since it does not have a peripheral rim, and in any case it relates to a lamination process in a fixed station, not in a portable laminating press, as is the plate object of the invention.

Patent EP 1092595 A1 also relates to a method, and not a plate, facilitating the production of an identification plate comprising a rigid backing plate having a peripheral upstanding rim bounding a flat area to receive a carrier sheet, one surface of which is printed with indicia and the other surface of which has a contact adhesive. In the method an edge of the carrier sheet is aligned in registration with the plate and the adhesive surface at said edge contacted therewith; the sheet then being progressively pressed into contact with the plate over the flat area using a pressure roller. Again, unlike the plate object of the invention, this invention relates to a method of production by means of pressure rollers and is particularly focused on the roller apparatus for carrying out said process. In the case of the plate of the present invention, the plates are digitally printed by means of a lamination process. Patent FR2983149A1 relates to an assembly having a rigid metal substrate comprising a colored upper face to receive a strip. A self adhesive transparent and flexible strip and a non adhesive and flexible retro reflective strip are pressed against each other, where the metal substrate includes zones with adhesive on the upper face, where the zones are protected by the strips. Again, this is a production process which has nothing to do with the plate of the present invention formed simply by lamination and digital printing of a sheet on a metal base.

And patent WO 2006/136847 A2, referring to supports and plates, the purpose of which is to provide an identification device, for example a vehicle plate, with measures to prevent its theft and/or that it can be easily identified as stolen. In this case, although the plate to which said means are applied consists of a metallic plate, it is a plate formed by an embossed body where both the edge and the characters are raised by its manufacturing method by means of embossing and, therefore, unlike what is exposed here, it is not a laminated metallic plate, but an embossed plate.

### DISCLOSURE OF THE INVENTION

The license plate proposed by the invention allows satisfactorily meeting the objectives indicated above, with the characterizing details that it possible and distinguish it being included in the final claims attached to the present description. More specifically, as indicated above, the plate of the invention is essentially configured simply from a metallic base provided with a peripheral rim and an upper sheet of transparent film having a thickness between 20 and 70 µm, which is fixed by means of gluing so as to be fitted in the central recess defined by the mentioned peripheral rim of the metallic base and on which the corresponding characters and logotypes are digitally printed, providing an aesthetic effect of a high-end plate with an acrylic finish and metallic reinforcement, but without being one, and with a much lower economic cost.

It should be mentioned that in one embodiment option, the logotypes and alphanumerical characters identifying the vehicle for which the license plate is intended are printed on the upper face of said upper sheet of film, which printing is preferably carried out by means of a digital printer at the time of producing the plate after being duly subjected to loads.

In an alternative embodiment option, the corresponding characters and logotypes are printed on the rear face of the upper sheet in mirrored fashion, and they are likewise printed by means of a digital printer at the time of producing the plate when subjected to loads.

In turn, the metallic base is preferably made of aluminum sheet to prevent undesired effects of corrosion, and its peripheral rim having projects above the upper face, defining the central recess in which the upper sheet of film with the characters and logotypes printed thereon tightly fits, providing both torsional and impact strength to the plate.

Furthermore, the surface of the front face of the metallic base, at least in the area of said central recess defined by the peripheral rim, incorporates a reflective film.

It should furthermore be mentioned that the plate comprises a layer of glue to provide suitable bonding between the lower base and the upper sheet, which may be incorporated on the lower face of the upper sheet or on the surface of the central recess defined by the peripheral rim of the metallic base, depending on whether the upper face or the lower face of said sheet is printed in mirrored fashion, being protected in any case with a film of siliconized paper which is removed at the time of producing the plate, which is preferably done by means of a lamination process. Namely, producing the plate preferably comprises the following steps:
- Firstly, the logotypes and alphanumerical characters identifying the vehicle are printed on the upper sheet of film with, either the upper face or on the lower face in mirrored fashion, by means of using a digital printer.
- Next, and after removing the siliconized paper protecting the layer of glue, the metallic base, which is already provided with the reflective surface, and the upper sheet of film with the logotypes and characters printed thereon are laminated by means of a portable laminating press.

Greater simplicity both in manufacturing the parts forming the plate and in the operations for producing same by means of laminating in a portable press is therefore verified, since the film simply must be printed on and just two elements, the base and the upper sheet, laminated.

### DESCRIPTION OF THE DRAWINGS

To complement the description being made and for the purpose of helping to better understand the features of the invention, a set of drawings is attached to the present specification as an integral part thereof, in which the following is depicted in an illustrative and non-limiting manner:
Figure 1 shows an exploded schematic cross-section view of the layers and elements comprised in the license plate object of the invention, according to an example thereof in which the upper face of the upper sheet of film is printed on, where the arrangement of said layers and elements can be seen.
Figure 2 shows an exploded cross-section view similar to the one shown in Figure 1 but of another example of the license plate according to the invention, in this case of an example in which the lower face of the upper sheet of film is printed on in mirrored fashion, where the arrangement of its layers and elements can be seen.
Figure 3 shows a top plan view of the essential parts of material comprised in the plate, depicted prior to passing through the process of printing the particular characters and the lamination process to form the plate.
Figure 4 shows a top plan view of a finished example of the plate of the invention, i.e., once printed on and laminated.

### PREFERRED EMBODIMENT OF THE INVENTION

In view of the mentioned figures and according to the numbering used, there can be observed therein respective non-limiting examples of the license plate of the invention, which comprises that which is indicated and described in detail below.

Therefore, as can be observed in said figures, the plate (1) in question, being of the type intended for being produced by means of lamination process using a portable laminating press, comprising a metallic base (2) provided with a peripheral rim (21), has, in addition to said metallic base (2), only an upper sheet (3) of transparent film having a thickness between 20 and 70 µm, which is fixed so as to be fitted in the central recess (20) defined by the mentioned peripheral rim (21) on the upper face of the metallic base (2) and on which the corresponding logotypes (5) and alphanumerical characters (6) are digitally printed, which printing is preferably carried out by means of a digital printer at the time of producing the plate after being subjected to loads and prior to being laminated.

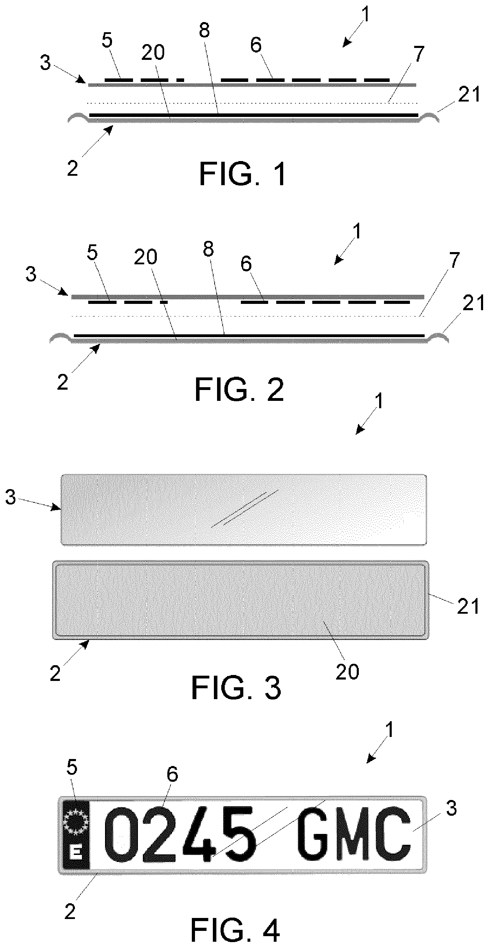

Considering Figure 1, it can be observed that in one embodiment option of the plate (1), the logotypes (5) and characters (6) are digitally printed on the upper face of said upper sheet (3) of transparent film.

In an alternative embodiment option, the logotypes (5) and characters (6) are digitally printed on the rear face of the upper sheet (3) of transparent film in mirrored fashion.

In turn, the metallic base (2), which is preferably made of aluminum sheet, incorporates a reflective film (8) on the surface of its front face, at least in the area of said central recess (20) defined by the peripheral rim (21).

As can be observed in the depictions of Figures 1 and 2, the bonding between the metallic base (2) and the upper sheet (3) of transparent film is carried out through a layer of glue (7), which may be incorporated on the lower face of said upper sheet (3) or on the surface of the central recess (20) defined by the peripheral rim (21) of the metallic base (2), depending on whether the upper face or the lower face of said upper sheet (3) is printed on in mirrored fashion.

Having sufficiently described the nature of the present invention as well as the way of putting it into practice, it is not considered necessary to further describe the invention so that a person skilled in the art can comprehend the scope thereof and the advantages derived from it.

## Claims

1. A license plate obtained by means of lamination in a portable laminating press, and comprising a metallic base (2) provided with a peripheral rim (21) defined by a central recess (20) on its upper face, wherein said metallic base (2) incorporates a reflective film (8) on the surface of its front face, at least in the area of the central recess (20) defining its peripheral rim (21), **characterized in that** in addition to said metallic base (2), the license plate has only one upper sheet (3) of transparent film, which is fixed so as to be fitted in the central recess (20) defining the mentioned peripheral rim (21) on the upper face of the metallic base (2) and on which corresponding logotypes (5) and alphanumerical characters (6) are digitally printed.

2. The license plate according to claim 1, **characterized in that** the upper sheet (3) of transparent film has a thickness between 20 and 70 µm.

3. The license plate according to claim 1 or 2, **characterized in that** the logotypes (5) and characters (6) are digitally printed on the upper face of the upper sheet (3) of transparent film.

4. The license plate according to claim 1 or 2, **characterized in that** the logotypes (5) and characters (6) are digitally printed in mirrored fashion on the lower face of the upper sheet (3) of transparent film.

## Patentansprüche

1. Nummernschild erhalten mittels Laminierung in einer tragbaren Laminierpresse, und umfassend eine metallische Basis (2) versehen mit einer Umfangskante (21), welche durch eine zentrale Aussparung (20) auf deren oberen Fläche definiert ist, wobei die genannte metallische Basis (2) einen reflektierenden Film (8) auf der Oberfläche deren Vorderfläche beinhaltet, mindestens im Bereich der zentralen Aussparung (20), welche deren Umfangskante (21) definiert, **dadurch gekennzeichnet, dass** zusätzlich zur genannten metallischen Basis (2), das Nummernschild nur eine obere Folie (3) aus durchsichtigem Film aufweist, welche fixiert ist, um in die zentrale Aussparung (20), welche die erwähnte Umfangskante (21) definiert, auf der oberen Fläche der metallischen Basis (2) eingepasst zu werden, und auf welcher entsprechende Logos (5) und alphanumerische Zeichen (6) digital gedruckt werden.

2. Nummernschild nach Anspruch 1, **dadurch gekennzeichnet, dass** die obere Folie (3) des durchsichtigen Filmes eine Dicke zwischen 20 und 70 µm aufweist.

3. Nummernschild nach Anspruch 1 oder 2, **dadurch gekennzeichnet, dass** die Logos (5) und die Zeichen (6) auf der oberen Fläche der oberen Folie (3) des durchsichtigen Filmes digital gedruckt werden.

4. Nummernschild nach Anspruch 1 oder 2, **dadurch gekennzeichnet, dass** die Logos (5) und die Zeichen (6) in gespiegelter Form auf der unteren Fläche der oberen Folie (3) des durchsichtigen Filmes digital gedruckt werden.

## Revendications

1. Plaque d'immatriculation obtenue au moyen de laminage dans une presse à laminer portable, et comprenant une base métallique (2) pourvue d'un bord périphérique (21) défini par un renfoncement central (20) sur sa face supérieure, dans laquelle ladite base métallique (2) incorpore un film réfléchissant (8) sur la surface de sa face avant, au moins dans la zone du renfoncement central (20) définissant son bord périphérique (21), **caractérisée en ce qu'**en plus de ladite base métallique (2), la plaque d'immatriculation a une seule une feuille supérieure (3) de film transparent, qui est fixée de manière à être encastrée dans le renfoncement central (20) définissant le bord périphérique (21) mentionné sur la face supérieure de la base métallique (2) et sur laquelle des logotypes correspondants (5) et des caractères alphanumériques (6) sont imprimés numériquement.

2. Plaque d'immatriculation selon la revendication 1, **caractérisée en ce que** la feuille supérieure (3) de film transparent a une épaisseur entre 20 et 70 µm.

3. Plaque d'immatriculation selon la revendication 1 ou 2, **caractérisée en ce que** les logotypes (5) et caractères (6) sont imprimés numériquement sur la face supérieure de la feuille supérieure (3) de film transparent.

4. Plaque d'immatriculation selon la revendication 1 ou 2, **caractérisée en ce que** les logotypes (5) et caractères (6) sont imprimés numériquement en effet miroir sur la face inférieure de la feuille supérieure (3) de film transparent.
